# EUROPEAN PATENT SPECIFICATION

(11) **EP 0 594 376 B1**
(45) Date of publication and mention of the grant of the patent: **26.06.1996**
(21) Application number: 93308255.4
(22) Date of filing: 15.10.1993
(51) Int. Cl.: H02K 7/102

(54) **Braking system for motors**
Bremssystem für Motoren
Système de freinage pour moteurs

(30) Priority: 19.10.1992 GB 9221876
(43) Date of publication of application: 27.04.1994
(73) Proprietor: ATCO-QUALCAST LIMITED, Suffolk IP14 1EY (GB)
(72) Inventor: Quigley, Andrew, Stowmarket, Suffolk IP14 1EY (GB)
(74) Representative: BROOKES & MARTIN

(56) References cited:
- DE-U- 8 618 334
- US-A- 3 038 109

## Description

This invention relates to a brake for a motor, particularly a small motor such as is used in an electric lawnmower.

Powered lawnmowers operate by providing one or more rapidly spinning or rotating blades to cut the vegetation. Even when the source of power is removed, the blade(s) continue to rotate or spin for some seconds. To reduce the risk of injury to the operator of the mower, there is a need to arrest the motion of the cutting blade(s) as quickly as possible.

Many braking systems have been proposed for electric motors. One known device is described in German utility model number 8618334.6. An electric motor with a ventable spring-loaded brake is described comprising a brake disc which is non-rotatably connected to the motor shaft but is axially movably arranged and may be pressed against the brake friction surface rigid with the casing, Wherein the brake disc is movable at least in one axial direction by an adjusting element operating as a function of centrifugal force, wherein the adjusting element comprises at least two pivotally mounted double-armed centrifugal force levers which are coupled to one another by at least one tension spring and are each articulated by their internal lever arm to the brake disc in such a way that the brake disc is axially movable in both directions by the adjusting element. However, there is a need for a simple but effective braking mechanism that can be used on domestic lawnmowers.

Accordingly, in one aspect of the present invention there is provided a brake for a motor wherein a resilient member is rotatable with the motor and is deformable from a first conf guration to a second configuration as the centrifugal force on the resilient member increases from zero to a predetermined level, the biasing force of the resilient member thereby decreasing as the speed of the motor increases, the reduced biasing force releasing the brake and the brake being re-applied whenever the centrifugal force on the resilient member falls below the said predetermined level; characterised in that the resilient member is of a concave shape and comprises a plurality of members extending radially from the centre thereof such that, with the motor at rest, a first braking surface rotatable with the motor is urged by the resilient member into frictional contact with a non-rotatable second braking surface to apply a braking torque and, as the speed of the motor increases, the radially extending members are splayed outwards by centrifugal force thereby reducing the braking torque and releasing the brake.

The resilient member can be progressively deformable from its first configuration to its second configuration as the centrifugal force on the member increases, or it may deform abruptly when the force reaches a predetermined level and return to its original configuration when the force next falls below the predetermined level or a lower level.

Preferably the tips of the radially extending members define the first braking surface and act directly upon the second braking surface to apply the brake.

Alternatively, the first braking surface may comprise a brake disc carried by and rotatable with an armature spindle of the motor. In such an arrangement the resilient member is preferably held on the armature spindle and urges the brake disc against a friction surface on the body of the motor.

In another aspect of the present invention there is provided an electric motor including a brake as described above.

An embodiment of the present invention will now be described in greater detail with reference to the accompanying drawings in which:
Figure 1 shows in cross-section an electric motor with a centrifugal brake embodying present invention; and
Figure 2 shows an end view of the electric motor of Figure 1.

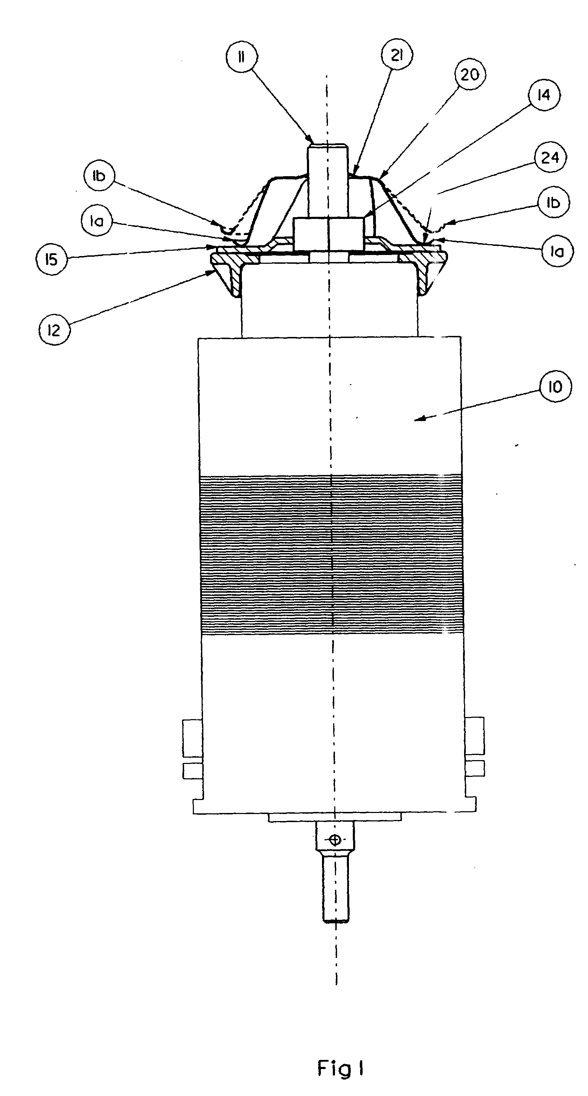

Figure 1 shows a motor body (10) having an armature spindle (11) extending outwardly therefrom, and an annular friction pad (12) surrounding the armature spindle and adhesively bonded or otherwise secured to one end of the motor (10). In one alternative embodiment (not shown), the friction pad 12 is merely held against the end of the motor body 10 by gravity while co-operating ribs on the body 10 and pad 12 interlock with one another to prevent rotation of the pad. In a further alternative embodiment, the friction pad 12 may comprise a plurality of discrete friction elements secured to the body (10) of the motor.

A non-circular (shown as hexagonal) nut (14) is located along the armature spindle and rotates with the spindle. A brake disc (15) having at the centre thereof an aperture matching the shape of the nut (14) is located over the nut such that rotation of the spindle (11) also causes rotation of the brake disc (15). A spring (20) is located on the distal end of the armature spindle (11) and is secured in position by a clip (21) formed integrally with spring (20). In an alternative embodiment, not shown, the clip may be provided as a separate item. As the spindle rotates so does the spring (20).

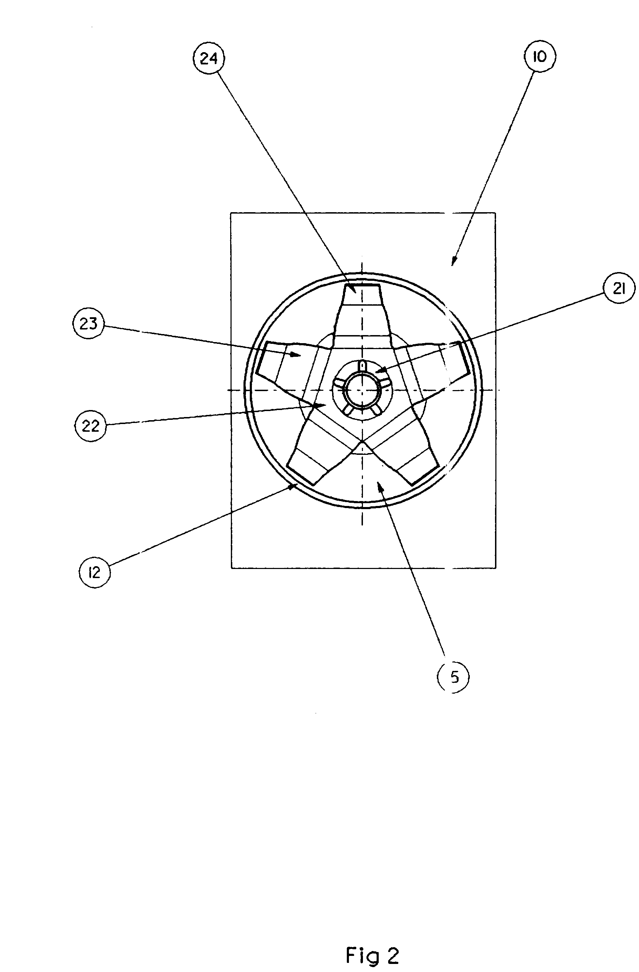

The spring (20) is substantially concave and comprises a plurality of members in the form of legs (23) extending radially outwards from a planar central portion (22) (as can be seen in Figure 2), each leg being angled relative to the plane of the central portion (22), thereby extending towards the brake disc (15) and, in the stationary state, making contact therewith.

At rest, the tips (24) of the legs (23) of the spring (20) urge the brake disc (15) into face-to-face contact with the friction pad (12) to apply the brake. When the power supply to the motor is switched on, the motor armature rotates, thereby causing rotation of the nut (14), the brake disc (15), and the spring (20). The motor has sufficient torque to overcome the braking torque provided by the contact between the brake disc (15) and friction pad (12) and, as the rotational speed of the armature increases, the centrifugal force on each of the legs (23) causes corresponding movement of the legs from a rest position la to a splayed position 1b (Fig. 1). The force exerted by the spring (20) on the brake disc (15) is consequently reduced and produces a corresponding reduction of the braking torque. Although the brake disc is constrained to rotate with the nut, it is axially displaceable along the nut. Thus, as the legs (23) of the spring splay outwards, the brake disc (15) is able to move axially away from the friction pad (12), the-eby releasing the brake completely.

When the power to the motor is switched off the rotational speed of the motor armature is initially reduced by aerodynamic and internal frictional losses. This continues until the centrifugal force acting on the spring (20) is reduced sufficiently for the legs (23) of the spring to once again exert a force on the brake disc (15), forcing it back into contact with the friction pad (12) and thereby producing rapid braking of the motor.

The motor (10) has particular application for rotating or reciprocating the cuttirg blade(s) in a lawnmower, hedgecut er or vegetation trimmer. In this case the opposite end of the armatire spindle 11 drives the cutting blades, and the centrifugal brake ensures that the blades are rapidly brought to rest after the motor has been switched off.

In an alternative embodiment (not shown) the nut (14) and brake disc (15) may be omitted. The legs (23) of spring (20) then act directly upon the friction surface (12) to apply the brake.

## Claims

1. A brake for a motor (10) wherein a resilient member (20) is rotatable with the motor and is deformable from a first configuration (1a) to a second configuration (1b) as the centrifugal force on the resilient member (20) increases from zero to a predetermined level, the biasing force of the resilient member (20) thereby decreasing as the speed of the motor increases, the reduced biasing force releasing the brake and the brake being re-applied whenever the centrifugal force on the resilient member (20) falls below the said predetermined level; characterised in that the resilient member (20) is of a concave shape and comprises a plurality of members (23) extending radially from the centre (22) thereof such that, with the motor it rest, a first braking surface (15, 24) rotatable with the motor (10) is urged by the resilient member (20) into frictional contact with a non-rotatable second braking surface (12) to apply a braking torque and, as the speed of the motor increases, the radially extending members (23) are splayed outwards by centrifugal force thereby reducing the braking torque and releasing the brake.

2. A brake according to Claim 1 whereir the tips (24) of the radially extending members (23) define the first braking surface (15) and act directly on the second braking surface (12) to apply the brake.

3. A brake according to claim 1 in which the first braking surface comprises a brake disc (15) carried by and rotatable with an armature spindle (11) of the motor.

4. A brake according to claim 3 in which the resilient member (20) is held on the armature spindle and urges the brake disc (15) against a friction surface (12) on the body of the member (10).

5. A brake according to any one of claims 1 to 4 wherein the resilient member (20) is progressively deformable from its first configuration to its second configuration as the centrifugal force on the member increases.

6. A brake according to any one of claims 1 to 4 wherein the resilient member (20) deforms abruptly from its first configuration to its second configuration when the centrifugal force reaches a predetermined level and returns to its original configuration when the force next falls below the predetermined level or a lower level.

7. An electric motor (10) comprising a rotatable armature spindle (11) and including a brake as claimed in any one of Claims 1 to 6, wherein the rotatable armature spindle carries the resilient member of the brake.

## Patentansprüche

1. Bremse für einen Motor (10), mit einen elastischen Element (20), das mit dem Motor rotieren kann und von einer ersten Konfiguration (1a) in eine zweite Konfiguration (1b) verformbar ist, wenn die auf das elastische Element (20) einwirkende Zentrifugalkraft von Null auf ein vorgegebenes Niveau ansteigt, wodurch die Vorspannkraft des elastischen Elements (20) mit steigender Geschwindigkeit des Motors abnimmt, aufgrund reduzierter Vorspannkraft die B-emse gelöst wird und die Bremse dann wieder wirksam wird, wenn die auf das elastische Element (20) wirkende Zentrifugalkraft unter das vorgegebene Niveau abfällt,
**dadurch gekennzeichnet,**
daß das elastische Element (20) eine konkave Form hat und eine Vielzahl von Gliedern (23) aufweist, die sich vom Zentrum (22) des elastischen Elements (20) radial nach außen erstrecken, derart, daß be. in Ruhestellung befindlichem Motor (10) eine mit dem Motor (10) rotierbare erste Bremsfläche (15,24) mittel; des elastischen Elements (20) in Reibungskontakt mit einer nicht rotierenden zweiten Bremsfläche (12) gedrückt ist, um ein Bremsmoment zu erzeugen, und daß bei steigender Geschwindigkeit des Motors die radial abstrebenden Glieder (23) durch Zentrifugalkraft nach iußen gespreizt werden und dadurch das Bremsmoment reduziert und die Bremse gelöst wird.

2. Bremse nach Anspruch 1, bei der die Eiden (24) der sich radial erstreckenden Glieder (23) die erste Bremsfläche bilden und direkt auf die zweite Bremsfläche (12) wirken, um die Bremswirkung zu erzielen.

3. Bremse nach Anspruch 1, bei der die erste Bremsfläche eine Bremsscheibe (15) aufweist, die von der Welle (11) des Motorläufers getragen ist und mit dieser rotierbar ist.

4. Bremse nach Anspruch 3, bei der das e astische Element (20) auf der Welle des Läufers qehalten ist und die Bremsscheibe (15) gegen eine Reibfläche (12) am Körper des Motors (10) drückt.

5. Bremse nach einem der Ansprüche 1 - 4 bei der das elastische Element (20) progressiv von seiner ersten Konfiguration in seine zweite Konfiguration verformbar ist, wenn die auf das elastische Element (20) wirkende Zentrifugalkraft zunimmt.

6. Bremse nach einem der Ansprüche 1 - 4 bei der das elastische Element (20) sich abrupt von seiner ersten Konfiguration in seine zweite Konfiguration verformt, wenn die Zentrifugalkraft ein vorgegebenes Niveau erreicht, und auf seine ursprüngliche Konfiguration zurückgeht, wenn die Zentrifugalkraft unter das vorgegebene Niveau oder auf ein Niveau darunter abfällt.

7. Elektromotor (10) mit einer rotierbaren Läuferwelle (11) und mit einer Bremse gemäß einem der Ansprüche 1 - 6, bei dem die rotierbare Läuferwelle das elastische Element der Bremse trägt.

## Revendications

1. Frein pour un moteur (10), dans lequel un organe élastique (20) peut tourner conjointement avec le moteur et est déformable pour passer d'une première configuration (1a) à une deuxièmes configuration (1b), lorsque la force centrifuge agissant sur l'organe élastique (20) augmente pour passer de zéro à un niveau prédéterminé, la force de déplacement de l'organe élastique (20) diminuant de ce fait au fur et à mesure que la vitesse du moteur augmente, la force de déplacement réduite libérant le frein et le frein étant ré-appliqué à chaque fois que la force centrifuge appliquée sur l'organe élastique (20) chute au-dessous dudit niveau prédéterminé;
caractérisé en ce que l'organe élastique (20) est d'une forme concave et comprend une pluralité d'organes (23) s'étendant radialement depuis son centre (22) de manière que, lorsque le moteur est au repos, une première surface de freinage (15 24) pouvant tourner avec le moteur (10) soit poussée par l'organe élastique (20) pour venir en contact dE friction avec une deuxième surface de freinage (12) non rotative, pour appliquer un couple de freinage et, lorsque la vitesse du moteur augmente, les organes (23) s'étendant radialement sont évasés vers l'extérieur par une force centrifuge, réduisant de ce fait le couple de freinage et libérant le frein.

2. Frein selon la revendication 1, dans lequel les extrémités (24) des organes (23) s'étendant radialement définissent la première surface de freinage (15) et agissent directement sur la deuxième surface de freinage (12) pour freiner.

3. Frein selon la revendication 1, dans lequel la première surface de freinage comprend un disque de frein (15) supporté par, et pouvant tourner conjointement avec, un tourillon à armature (11) du moteur.

4. Frein selon la revendication 3, dans lequel l'organe élastique (20) est maintenu sur le tourillon à armature et pousse le disque de frein (15) contre une surface de friction (12) se trouvant sur le corps du moteur (10).

5. Frein selon l'une quelconque des revendications 1 à 4, dans lequel l'organe élastique (20) est déformable progressivement pour passer de sa première configuration à sa deuxième configuration, lorsque la force centrifuge agissant sur l'organe augmente.

6. Frein selon l'une quelconque des revendications 1 à 4, dans lequel l'organe élastique (20) se déforme brutalement pour passer de sa première configuration à sa deuxième configuration, lorsque la force centrifuge atteint un niveau prédéterminé et retourne dans sa configuration d'origine, lorsque la force chute ensuite au-dessous du niveau prédéterminé ou à un niveau inférieur.

7. Moteur électrique (10) comprenant un tourillon à armature (11) rotatif et un frein selon l'une quelconque des revendications 1 à 6, dans lequel le tourillon à armature rotatif supporte l'organe élastique du frein.
